# EUROPEAN PATENT APPLICATION

(11) **EP 4 191 464 A1**
(43) Date of publication of application: **07.06.2023**
(21) Application number: 21859566.8
(22) Date of filing: 30.03.2021
(51) Int. Cl.: G06F 30/20

(54) **METHOD FOR CONSTRUCTING SIMULATION TRAFFIC FLOW AND SIMULATION DEVICE**

(30) Priority: 24.08.2020 CN 202010857186
(71) Applicant: Huawei Technologies Co., Ltd., Shenzhen, Guangdong 518129 (CN)
(72) Inventor: JIANG, Yi, Shenzhen, Guangdong 518129 (CN); YU, Bende, Shenzhen, Guangdong 518129 (CN); WU, Hao, Shenzhen, Guangdong 518129 (CN); ZHANG, Liangzhuang, Shenzhen, Guangdong 518129 (CN)
(74) Representative: Körber, Martin Hans
(86) International application number: PCT/CN2021/083755
(87) International publication number: WO 2022/041717

(57) **Abstract**

Embodiments of this application disclose a method for constructing a simulation traffic flow and a simulation device, which may be used in the field of autonomous driving simulation tests. The method includes: First, a traffic scenario library that meets a test requirement is forward constructed for different simulation test objectives. A quantity of traffic scenario files of each type and proportions of traffic scenario files of different traffic scenario types in the traffic scenario library can be customized, and flexibility is high. Compared with collecting real traffic flow data, in this method, the traffic scenario library does not need to be labelled, has low costs, and is easy to obtain. In addition, the traffic scenario library is comprehensive and is not limited by collected data, ensuring test completeness. Then, a simulation device successively reads traffic scenario files from the traffic scenario library, and controls a simulation vehicle to transit from a start state in a previous scenario to an end state in a current scenario, to implement continuous allocation of different simulation scenarios, so that a generated simulation traffic flow can cover continuous switchovers between different scenarios under test. Finally, a corresponding test result for each simulation scenario is generated in real time with high efficiency.

## Description

This application claims priority to Chinese Patent Application No. 202010857186.8, filed with the China National Intellectual Property Administration on August 24, 2020 and entitled "METHOD FOR CONSTRUCTING SIMULATION TRAFFIC FLOW AND SIMULATION DEVICE", which is incorporated herein by reference in its entirety.

### TECHNICAL FIELD

This application relates to the field of autonomous driving simulation tests, and in particular, to a method for constructing a simulation traffic flow and a simulation device.

### BACKGROUND

Development of an autonomous driving system follows a process from simulation to real vehicle testing. As a zero-risk and fast iterative test method, simulation experiments lay a solid foundation for road testing of autonomous driving. The simulation can quickly test performance of an autonomous driving algorithm.

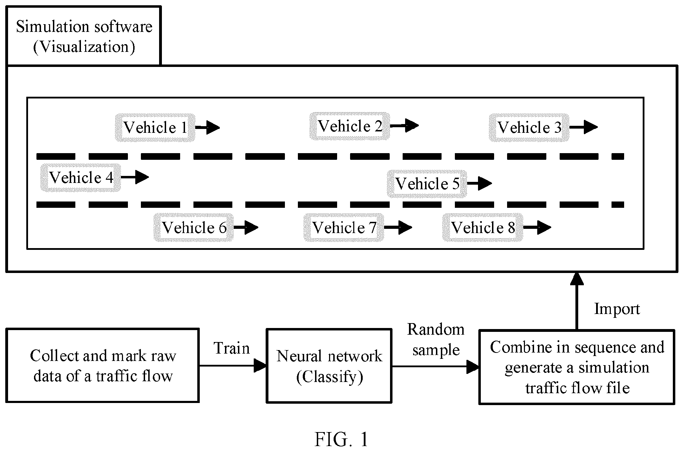

A basis of the simulation experiment is to first construct a simulation traffic flow. Currently, a commonly used method of constructing a simulation traffic flow is first labelling raw data of a traffic flow collected on a real road, training a neural network model by using the labelled raw data, to implement a function of classifying different test scenarios in the traffic flow, then performing random sampling and combining different classified test scenarios in sequence to generate a simulation traffic flow file, and finally importing the generated simulation traffic flow file into simulation software, as shown in FIG. 1.

However, the raw data of the traffic flow needs to be labelled and collection costs are high. The raw data of the traffic flow is not public data, and obtaining the raw data of the traffic flow without permission has legal risks. In addition, the constructed simulation traffic flow is essentially a single scenario output by the simulation software. In this case, testing includes only the single scenario and omits continuous switchovers between different scenarios, resulting in incomplete testing.

### SUMMARY

Embodiments of this application provide a method for constructing a simulation traffic flow and a simulation device, to read a traffic scenario file from a forward constructed traffic scenario library, to implement continuous allocation of different simulation scenarios, so that a generated simulation traffic flow can cover continuous switchovers between different simulation scenarios under test.

In view of this, embodiments of this application provide the following technical solutions.

According to a first aspect, embodiments of this application first provide a method for constructing a simulation traffic flow. The method may be used in the field of autonomous driving, and the method includes: First, a simulation device reads a first traffic scenario file from a traffic scenario library. The traffic scenario library is forward constructed. To be specific, a plurality of forward constructed traffic scenario files are a plurality of scenario files constructed based on subject knowledge, and are different from conventionally collected raw data of traffic flows (that is, analyzing and extracting a valuable traffic scenario from collected raw data of real traffic flows is a data-based analysis method). Types of traffic scenarios and a quantity of traffic scenarios of each type included in the forward constructed traffic scenario library are clear. The traffic scenario library includes a plurality of traffic scenario files. Each of the plurality of traffic scenario files includes duration of each traffic scenario and a running state of each simulation vehicle in each traffic scenario at each unit moment in the duration. Each traffic scenario file corresponds to a type of traffic scenarios. Types of traffic scenarios are classified according to a preset principle. Single-function scenarios in autonomous driving may be classified by testing and analyzing autonomous driving scenarios, for example, vehicle following, stopping before an obstacle, or lane changing to the left or right. Alternatively, road scenarios actually in autonomous driving may be classified, for example, a rural road scenario, a scenario without a lane line, an intersection scenario, an expressway scenario, and a mountain road scenario. A specific principle for classifying types of traffic scenario is not limited. Then, the simulation device controls each simulation vehicle to transit from a second running state to a first running state. The second running state is a running state of each simulation vehicle at the last unit moment in a second traffic scenario file, that is, an end state in a previously read traffic scenario file. The first running state is a running state of each simulation vehicle corresponding to the first unit moment in the first traffic scenario file, that is, a start state in a currently read traffic scenario file. The second traffic scenario file is a traffic scenario file of a first simulation scenario generated through simulation software. Then, the simulation device generates, through the simulation software, a second simulation scenario based on the first traffic scenario file by using the first running state as a new start state. The first simulation scenario is a simulation scenario generated previous to the second simulation scenario. Finally, the generated first simulation scenario and the generated second simulation scenario constitute the simulation traffic flow in this embodiment of this application.

In the foregoing implementation of this application, first, the traffic scenario library that meets a test requirement may be forward constructed for different simulation test objectives. A quantity of traffic scenario files of each type and traffic scenario types in the traffic scenario library can be customized, and flexibility is high. Compared with collecting real traffic flow data, the traffic scenario library does not need to be labelled, has low costs, and is easy to obtain. In addition, the traffic scenario library is comprehensive and is not limited by collected data, so that test completeness can be ensured. Second, the simulation device successively reads the traffic scenario files (that is, successively reads the second traffic scenario file and the first traffic scenario file) from the forward constructed traffic scenario library, and controls the simulation vehicle to transit from the start state in the previous scenario to the end state in the current scenario, to implement continuous allocation of the two simulation scenarios. Therefore, the generated simulation traffic flow can cover continuous switchovers between the two scenarios under test, so that the test is more comprehensive.

In a possible design of the first aspect, the simulation device controls each simulation vehicle to transit from the second running state to the first running state within specified duration (for example, within 3 seconds) by using a driver model of the simulation vehicle. A driving style (for example, a radical style or a conservative style) of the driver model of each simulation vehicle may be customized. Details are not described herein.

In the foregoing implementation of this application, because the driver model of the simulation vehicle is generally an ideal driving model, switching between two scenarios can be smooth, and a running curve of the simulation vehicle is smoother and is closer to that in a real driving scenario.

In a possible design of the first aspect, the simulation device repeatedly performs the step of generating the second simulation scenario until a preset condition is met. It should be noted that the simulation device may be a computer device in any form, for example, a personal computer or a server. This is not specifically limited herein.

In the foregoing implementation of this application, the simulation device successively reads a plurality of traffic scenario files from the forward constructed traffic scenario library to perform simulation until the prediction condition is met, and controls the simulation vehicle to transit from the start state in the previous scenario to the end state in the current scenario, to implement continuous allocation of a plurality of different simulation scenarios. Therefore, the generated simulation traffic flow can cover continuous switchovers between different scenarios under test. The simulation traffic flow obtained in this embodiment of this application includes more simulation scenarios, and is comprehensive.

In a possible design of the first aspect, there may be a plurality of manners of determining that the preset condition is met, and one of the manners of determining that the preset condition is met may be as follows: When a quantity of simulation scenarios generated through the simulation software reaches a preset value, it indicates that the preset condition is met. For example, it is assumed that the preset value n is set to 300, and a currently running scenario is a scenario i. When running of the scenario i ends, if i=i+1<300, it indicates that the preset condition is not met, and a traffic scenario file continues to be read from the traffic scenario library. In this case, the simulation traffic flow is being continuously constructed. When i=i+1=300, it indicates that the preset condition is met, and in this case, 300 simulation scenarios that are continuously read and run constitute the simulation traffic flow in this application.

In the foregoing implementation of this application, a condition for terminating construction of the simulation traffic flow is specifically described. In this termination manner, it is not limited that each traffic scenario file in the traffic scenario library needs to be read provided that a quantity of read traffic scenario files reaches the preset value, and randomness of construction of the simulation traffic flow is emphasized.

In a possible design of the first aspect, another manner of determining that the preset condition is met may be as follows: When running duration of the simulation software reaches preset duration, it indicates that the preset condition is met. For example, it is assumed that the preset duration t is set to 20 hours (h). Each time running of a scenario i ends, the simulation device determines whether current running duration t' of the simulation software reaches 20 h. When the running of the scenario i ends and t' < t = 20h, it indicates that the preset condition is not met, and a traffic scenario file continues to be read from the traffic scenario library. In this case, the simulation traffic flow is being continuously constructed. When running of the scenario i ends and t' > t = 20h, it indicates that the preset condition is met. In this case, simulation scenarios that are continuously read and run constitute the simulation traffic flow in this application.

In the foregoing implementation of this application, another condition for terminating construction of the simulation traffic flow is specifically described. In this termination manner, overall running duration of the simulation software is limited, because a running time period can be customized, a probability that the simulation software is unexpectedly interrupted in a running process is reduced.

In a possible design of the first aspect, another manner of determining that the preset condition is met may be as follows: When each traffic scenario file in the traffic scenario library is read at least once, it indicates that the preset condition is met. Specifically, if a traffic scenario file in the traffic scenario library has not been read once, it indicates that the preset condition is not met, and the foregoing process is repeated to continue to read a traffic scenario file from the traffic scenario library. If each traffic scenario file is read at least once, it indicates that the preset condition is met. In this case, after running of a current scenario i ends, a traffic scenario file is no longer read from the traffic scenario library, and the simulation ends. It should be noted that, in some implementations of this application, the simulation device labels a read traffic scenario file, and then when reading the traffic scenario file again, may successively read traffic scenario files from remaining unread traffic scenario files, or may directly randomly read a traffic scenario file in the entire traffic scenario library (that is, a read traffic scenario file and an unread traffic scenario file are not distinguished) provided that all traffic scenario files in the entire traffic scenario library have been read at least once. Specifically, a manner of reading a traffic scenario file is not limited herein.

In the foregoing implementation of this application, another condition for terminating construction of the simulation traffic flow is specifically described. In this termination manner, each traffic scenario file in the traffic scenario library needs to be read at least once, that is, various simulation scenarios appear at least once in the constructed simulation traffic flow, to improve test completeness.

In a possible design of the first aspect, the simulation traffic flow may be constructed to achieve a plurality of objectives. For example, the simulation traffic flow may be constructed to reproduce or predict a traffic running state of an existing system or a future system, to explain and analyze a complex traffic phenomenon; or may be constructed to optimize a researched traffic system. A specific objective of constructing the simulation traffic flow is not limited herein. In some implementations of this application, the constructed simulation traffic flow may be specifically used to test related functions and performance of an intelligent driving vehicle. Specifically, the simulation device imports an autonomous driving algorithm into the simulation software, and tests the autonomous driving algorithm based on different detection types, to obtain a test result of the autonomous driving algorithm in each simulation scenario.

In the foregoing implementation of this application, the to-be-tested autonomous driving algorithm is imported into the simulation software, to test related performance of the autonomous driving algorithm in each simulation scenario in which the constructed simulation traffic flow runs, which is highly practicable.

In a possible design of the first aspect, when a test result does not meet a preset requirement, the simulation device may further label a traffic scenario file corresponding to the test result. When subsequently reading the traffic scenario file from the traffic scenario library, the simulation device increases frequency of reading the traffic scenario file. That is, frequency of reading the labelled first traffic scenario file is higher than frequency of reading the unlabelled first traffic scenario file.

In the foregoing implementation of this application, a corner case library may be formed in a closed loop, and a traffic scenario file with a poor test result can be subsequently read more frequently, to improve optimization efficiency of the autonomous driving algorithm.

In a possible design of the first aspect, the detection type includes but is not limited to at least one of collision detection, speed limit detection, on-road detection, intersection lane change detection, destination arrival detection, lane centering detection, emergency braking detection, acceleration detection, unnecessary braking detection, or smoothness detection. The collision detection is used to determine whether an ego vehicle collides with a surrounding obstacle. The speed limit detection is used to determine whether the ego vehicle exceeds a speed limit of an ego lane. The on-road detection is used to determine whether the ego vehicle travels on a correct road. The intersection lane change detection is used to determine whether the ego vehicle changes a lane before an intersection to enter a correct lane. The destination arrival detection is used to determine whether the ego vehicle reaches a range around a destination. The lane centering detection is used to determine whether the ego vehicle is at the center of a lane. The emergency braking detection is used to determine whether braking of the ego vehicle is too urgent, and affects driving comfort. The acceleration detection is used to determine whether an acceleration/a deceleration of the ego vehicle exceeds a preset threshold and whether acceleration/deceleration frequency is too high. The unnecessary braking detection is used to determine whether the ego vehicle has an unnecessary braking behavior. The smoothness detection is used to determine whether a speed of the ego vehicle greatly fluctuates.

In the foregoing implementation of this application, test content of each detection type is specifically described, and the test is highly targeted, comprehensive, and practicable.

In a possible design of the first aspect, to ensure completeness of classification in the traffic scenario library, in this embodiment of this application, traffic scenario files in the traffic scenario library are orthogonally classified into nine traffic scenario types: a traffic scenario file used to test free driving on an ego lane, a traffic scenario file used to test obstacle avoidance and bypassing on an ego lane, a traffic scenario file used to test a lane change to the left, a traffic scenario file used to test a lane change to the right, a traffic scenario file used to test cancellation of a lane change to the left, a traffic scenario file used to test cancellation of a lane change to the right, a traffic scenario file used to test vehicle following on an ego lane, a traffic scenario file used to test stopping before an obstacle on an ego lane, and a traffic scenario file used to test pulling over. Therefore, in this embodiment of this application, for different test objectives, the plurality of traffic scenario files in the constructed traffic scenario library include at least one of the foregoing nine traffic scenario types.

In the foregoing implementation of this application, traffic scenario types, a quantity of traffic scenario files of each type, and proportions of traffic scenario files of different traffic scenario types included in the forward constructed traffic scenario library may all be customized, and flexibility is high.

According to a second aspect, an embodiment of this application provides a simulation device, and the simulation device has a function of implementing the method according to any one of the first aspect or the possible implementations of the first aspect. The function may be implemented by hardware, or may be implemented by hardware executing corresponding software. The hardware or the software includes one or more modules corresponding to the function.

According to a third aspect, an embodiment of this application provides a simulation device. The simulation device may include a memory, a processor, and a bus system. The memory is configured to store a program. The processor is configured to invoke the program stored in the memory, to perform the method according to any one of the first aspect or the possible implementations of the first aspect of embodiments of this application.

According to a fourth aspect, this application provides a computer-readable storage medium. The computer-readable storage medium stores instructions. When the instructions are run on a computer, the computer is enabled to perform the method according to any one of the first aspect or the possible implementations of the first aspect.

According to a fifth aspect, an embodiment of this application provides a computer program or a computer program product. When the computer program or computer program product is run on a computer, the computer is enabled to perform the method according to any one of the first aspect or the possible implementations of the first aspect.

### BRIEF DESCRIPTION OF DRAWINGS

FIG. 1 is a schematic diagram of currently constructing a simulation traffic flow;
FIG. 2 is a flowchart of a method for constructing a simulation traffic flow according to an embodiment of this application;
FIG. 3 is a schematic diagram of a visualization process of importing a traffic scenario file into simulation software for running according to an embodiment of this application;
FIG. 4 is a schematic diagram of a constructed traffic scenario library according to an embodiment of this application;
FIG. 5 is a schematic diagram of a switching process between two scenarios according to an embodiment of this application;
FIG. 6 is a schematic diagram of continuously reading a traffic scenario file from a traffic scenario library until a preset condition is met according to an embodiment of this application;
FIG. 7 is another schematic diagram of continuously reading a traffic scenario file from a traffic scenario library until a preset condition is met according to an embodiment of this application;
FIG. 8 is another schematic diagram of continuously reading a traffic scenario file from a traffic scenario library until a preset condition is met according to an embodiment of this application;
FIG. 9 is a schematic diagram of internal logic of continuous scenario allocation according to an embodiment of this application;
FIG. 10 is a schematic diagram of a structure of a simulation device according to an embodiment of this application;
FIG. 11 is a schematic diagram of a structure of another simulation device according to an embodiment of this application;
FIG. 12 is a schematic diagram of a structure of another simulation device according to an embodiment of this application; and
FIG. 13 is a schematic diagram of a structure of another simulation device according to an embodiment of this application.

### DESCRIPTION OF EMBODIMENTS

Embodiments of this application provide a method for constructing a simulation traffic flow and a simulation device, to read a traffic scenario file from a forward constructed traffic scenario library, to implement continuous allocation of different simulation scenarios, so that a generated simulation traffic flow can cover continuous switchovers between different simulation scenarios under test.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

To better understand the solutions in embodiments of this application, the following first describes terms and concepts that may be used in embodiments of this application.

A traffic flow is an automobile flow formed when automobiles continuously travel on a road, and in a broad sense, further includes a vehicle flow of another vehicle and a pedestrian flow. In a period of time, the traffic flow is in a continuous flow state on a road section that is not affected by a horizontal cross, and is in a discontinuous flow state when encountering traffic light controlling at an intersection. Generally, the traffic flow may be classified into a motor vehicle flow, a non-motor vehicle flow, and a hybrid traffic flow based on components in the traffic flow.

Simulation traffic flow (traffic flow simulation): A traffic flow of a target requirement is constructed in a simulation scenario, or a traffic flow in a real scenario is simulated, to construct a dynamic simulation field, and test functions and performance of an intelligent driving vehicle. In embodiments of this application, for ease of understanding, an example in which the simulation traffic flow is a simulation motor vehicle flow is used for illustration.

Forward construction of the traffic scenario library: A traffic scenario library is constructed based on a specific scenario structure, knowledge of related subjects, and a test requirement of an autonomous driving system by analyzing static and dynamic elements to be processed by the autonomous driving system. This forward construction method is a knowledge-based construction method, and emphasizes explainability. Compared with conventionally collecting raw data of a traffic flow (that is, extracting a valuable scenario from the collected raw data of a traffic flow is a data-based analysis method), types of scenarios and a quantity of scenarios of each type in the forward constructed traffic scenario library are clear. In this embodiment of this application, the traffic scenario library is voluntarily constructed. The traffic scenario library constructed in this application includes a plurality of traffic scenario files. The plurality of traffic scenario files may belong to different traffic scenario types. The traffic scenario types are classified according to a preset principle in embodiments of this application.

Simulation scenario: or referred to as a virtual scenario, is used to test a virtual scenario of an intelligent driving vehicle in a simulation environment. The simulation scenario includes multi-dimensional elements such as static, quasi-static, and dynamic elements.

The following describes embodiments of this application with reference to accompanying drawings. It is clear that the described embodiments are merely some rather than all of embodiments of this application. A person of ordinary skill in the art may learn that, with development of technologies and emergence of a new scenario, the technical solutions provided in embodiments of this application are also applicable to a similar technical problem.

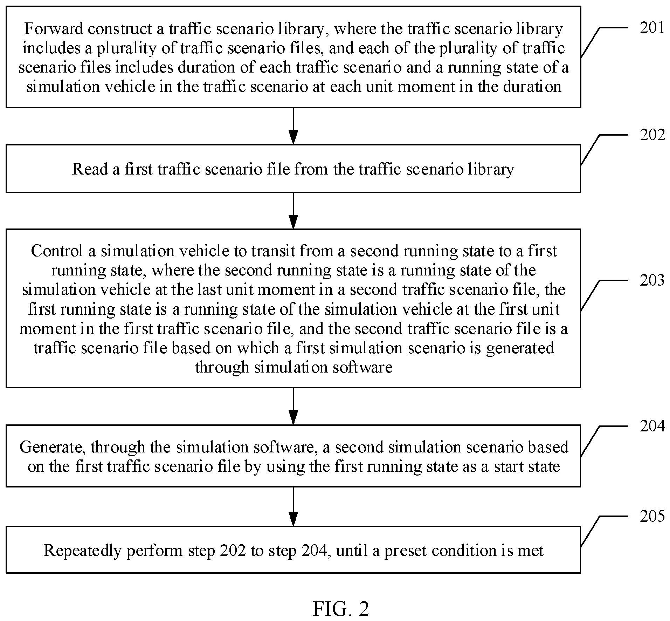

First, an embodiment of this application provides a method for constructing a simulation traffic flow. As shown in FIG. 2, the method may include the following steps.

201: Forward construct a traffic scenario library, where the traffic scenario library includes a plurality of traffic scenario files, and each of the plurality of traffic scenario files includes duration of each traffic scenario and a running state of a simulation vehicle in the traffic scenario at each unit moment in the duration.

First, the traffic scenario library meeting a test requirement is forward constructed. The traffic scenario library constructed in this application includes the plurality of traffic scenario files. In other words, the plurality of forward constructed traffic scenario files are a plurality of scenario files constructed based on subject knowledge. Different from conventionally collecting raw data of a traffic flow (that is, extracting a valuable scenario from collected raw data of a real traffic flow by analysis is a data-based analysis method), traffic scenario types and a quantity of traffic scenarios of each type in the forward constructed traffic scenario library are clear. Each traffic scenario file corresponds to a traffic scenario type. The traffic scenario types are classified according to a preset principle. Single-function scenarios in autonomous driving may be classified by testing and analyzing an autonomous driving scenario, for example, vehicle following, stopping before an obstacle, and lane changing to the left or right. Alternatively, road scenarios actually in autonomous driving may be classified, for example, a rural road scenario, a scenario without a lane line, an intersection scenario, an expressway scenario, and a mountain road scenario. A specific principle for classifying traffic scenario types is not limited. It should be noted that various traffic scenarios described in this embodiment of this application are all traffic application scenarios.

Preferably, to ensure completeness of the traffic scenario library, in some implementations of this application, considering that actions delivered in autonomous driving planning control include horizontal actions and longitudinal actions, corresponding function points are orthogonally obtained with reference to scenarios, to obtain corresponding traffic scenario types, to ensure completeness of test analysis. Specific classification of traffic scenario types may be shown in Table 1.

**Table 1: Example of classification of traffic scenario types in the traffic scenario library**

| Longitudinal action | | | Longitudinal | | | |
|---|---|---|---|---|---|---|
| | | | No obstacle | Obstacle | | |
| Horizontal action | | | Driving without obstacles | Overtaking | Vehicle following | Emergency stop |
| Horizontal | Ego lane | Lane centering | Free driving | | Vehicle following on the ego lane | Stopping before an obstacle |
| | | Obstacle avoidance on the ego lane | | Obstacle avoidance and bypassing on the ego lane | | |
| | Adjacent lane | Lane change to the left | | Lane change to the left | | |
| | | Lane change | | Lane change to the | | |
| | | to the right | | right | | |
| | | Cancellation of a lane change | | Cancellation of a lane change to the left | | |
| | | | | Cancellation of a lane change to the right | | |
| | | Pulling over | | | | Pulling over |

It can be learned from Table 1 that to ensure completeness of classification in the traffic scenario library, in this embodiment of this application, traffic scenario files in the traffic scenario library are orthogonally classified into nine traffic scenario types: a traffic scenario file used to test free driving on an ego lane, a traffic scenario file used to test obstacle avoidance and bypassing on an ego lane, a traffic scenario file used to test a lane change to the left, a traffic scenario file used to test a lane change to the right, a traffic scenario file used to test cancellation of a lane change to the left, a traffic scenario file used to test cancellation of a lane change to the right, a traffic scenario file used to test vehicle following on an ego lane, a traffic scenario file used to test stopping before an obstacle on an ego lane, and a traffic scenario file used to test pulling over.

Advantages of the foregoing classification manner are as follows: (1) Compared with collecting real traffic flow data, a traffic scenario library does not need to be labelled, has low costs, and is easy to obtain. (2) A traffic scenario library is comprehensive, is not limited by collected data, and test completeness can be ensured (a conventional simulation traffic flow tends to be blindly tested, or traffic flows in a specific region are learned by using a neural network and a random traffic flow is generated, which cannot explain how many scenarios are tested, and explainability of scenario coverage is poor). In addition, limitations of a region and time in real traffic flow data are avoided. (3) A quantity of traffic scenario files of each type and proportions of traffic scenario files of different traffic scenario types can be customized, and flexibility is high.

It should be noted that the nine traffic scenario types of the traffic scenario files in the traffic scenario library are intended to ensure completeness of the traffic scenario types in the traffic scenario library. In some implementations of this application, traffic scenario types of the traffic scenario files in the traffic scenario library may be constructed for different test objectives. For example, if only lane centering detection is required, the constructed traffic scenario library may include only at least one of three traffic scenario types: the traffic scenario file used to test free driving on an ego lane, the traffic scenario file used to test vehicle following on an ego lane, and the traffic scenario file used to test stopping before an obstacle on an ego lane.

In conclusion, in this embodiment of this application, the forward constructed traffic scenario library includes the plurality of traffic scenario files. Based on different test objectives, the plurality of traffic scenario files may include at least one of the nine traffic scenario types. Similarly, traffic scenario types, a quantity of traffic scenario files of each type, and proportions of traffic scenario files of different traffic scenario types included in the forward constructed traffic scenario library may all be customized, and flexibility is high.

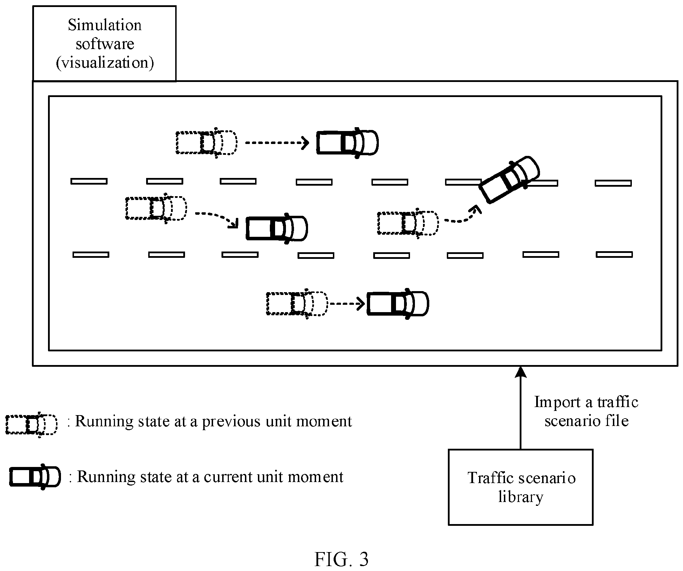

It should be noted herein that the traffic scenario file includes duration of a traffic scenario and a running state of each simulation vehicle in the traffic scenario at each unit moment within the duration. For ease of understanding, the following uses an example for description. FIG. 3 shows a visualization process of importing a traffic scenario file into simulation software for running. It is assumed that duration of a traffic scenario corresponding to the traffic scenario file is 30 seconds, a refresh frequency of a running state of each simulation vehicle is once per second, and there are four simulation vehicles in the scenario (as shown in FIG. 3). In this case, there are 30 unit moments in the duration (each second in the 30 seconds corresponds to one unit moment). Each simulation vehicle stores a related parameter such as a location or a running speed of the simulation vehicle in a corresponding running state at each unit moment (that is, the 1^{st} second, the 2^{nd} second, the 3^{rd} second, ..., and the 30^{th} second are respectively the 1^{st} unit moment, the 2^{nd} unit moment, ..., and the 30^{th} unit moment). A running state of each simulation vehicle corresponding to the 1^{st} unit moment (that is, the 1^{st} second in the 30 seconds) of the traffic scenario file may be referred to as a start state in the traffic scenario file, and a running state of each simulation vehicle corresponding to the last unit moment (that is, the 30^{th} second in the 30 seconds, and the 30^{th} unit moment) of the traffic scenario file may be referred to as an end state in the traffic scenario file. In FIG. 3, a simulation vehicle with a dashed line is a running state at a previous unit moment, and a simulation vehicle with a solid line is a running state at a current unit moment. For another example, FIG. 3 is still used as an example. It is assumed that duration of a scenario corresponding to the traffic scenario file is 30 seconds, a refresh frequency of a running state of each simulation vehicle is twice per second, and there are four simulation vehicles in the scenario. In this case, there are 15 unit moments in the duration (every two seconds in the 30 seconds correspond to one unit moment). Each simulation vehicle stores a related parameter such as a location or a running speed of the simulation vehicle in a corresponding running state at each unit moment (that is, the 2^{nd} second, the 4^{th} second, the 6^{th} second, ..., and the 30^{th} second are respectively the 1^{st} unit moment, the 2^{nd} unit moment, ..., and the 15^{th} unit moment). A running state of each simulation vehicle corresponding to the 1^{st} unit moment (that is, the 2^{nd} second in the 30 seconds) of the traffic scenario file may be referred to as a start state in the traffic scenario file, and a running state of each simulation vehicle corresponding to the last unit moment (that is, the 30^{th} second in the 30 seconds, and the 15^{th} unit moment) of the traffic scenario file may be referred to as an end state in the traffic scenario file.

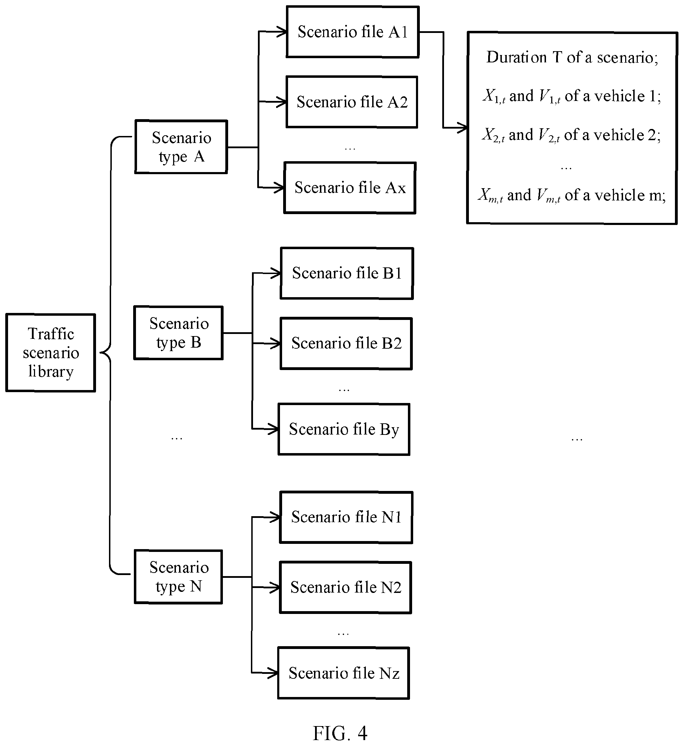

For ease of understanding, the forward constructed traffic scenario library is described herein. FIG. 4 shows a constructed traffic scenario library according to an embodiment of this application. The traffic scenario library includes n (n≥1) traffic scenario types: a scenario type A, a scenario type B, ..., and a scenario type N, and each traffic scenario type includes a specific quantity of traffic scenario files (which may be customized). Each traffic scenario file includes parameter information (for example, the foregoing running state at each unit moment) related to each simulation vehicle in the scenario. For example, a scenario file A1 includes duration T of a scenario, a location *X*_{1*,t*} and a speed *V*_{1*,t*} of a vehicle 1 at each unit moment (t is a unit moment), a location *X*_{2,*t*} and a speed *V*_{2,*t*} of a vehicle 2 at each unit moment, ..., and a location *X_{m,t}* and a speed *V_{m,t}* of a vehicle m at each unit moment.

It should be noted that although the traffic scenario library is forward constructed, a high-risk scenario encountered in a real driving scenario may be abstracted into a traffic scenario file, and the traffic scenario file is supplemented into the traffic scenario library, so that the traffic scenario library has more scenario forms.

202: Read a first traffic scenario file from the traffic scenario library.

After the traffic scenario library is constructed, a simulation device may read a traffic scenario file from the traffic scenario library. A currently read traffic scenario file may be referred to as a first traffic scenario file. In this embodiment of this application, the simulation device may be a computer device in any form, for example, a personal computer or a server. This is not specifically limited herein.

It should be noted that a manner in which the simulation device reads a traffic scenario file from the traffic scenario library may include but is not limited to the following manners: (1) The traffic scenario files included in the traffic scenario library may be stored in a storage module of the simulation device, and the simulation device directly reads the traffic scenario file from the storage module. (2) The traffic scenario files included in the traffic scenario library are stored in another device, and the simulation device reads the traffic scenario file from the another device in a wireless or wired connection manner.

203: Control a simulation vehicle to transit from a second running state to a first running state, where the second running state is a running state of the simulation vehicle at the last unit moment in a second traffic scenario file, the first running state is a running state of the simulation vehicle at the first unit moment in the first traffic scenario file, and the second traffic scenario file is a traffic scenario file based on which a first simulation scenario is generated through simulation software.

After reading the first traffic scenario file, the simulation device may control each simulation vehicle through a control interface of the simulation software. Specifically, first, each simulation vehicle is controlled to transit from the second running state to the first running state. The second running state is a running state of the simulation vehicle at the last unit moment in the second traffic scenario file (that is, an end state in a previous traffic scenario file). The first running state is a running state of the simulation vehicle at the first unit moment in the first traffic scenario file (that is, a start state in a current traffic scenario file). The second traffic scenario file is specifically a traffic scenario file based on which the first simulation scenario is generated through the simulation software. Both the first traffic scenario file and the second traffic scenario file are traffic scenario files read from the traffic scenario library.

It should be noted that in some implementations of this application, that the simulation device controls the simulation vehicle to transit from the second running state to the first running state may be: controlling the simulation vehicle to transit from the second running state to the first running state within specified duration (for example, within 3 seconds) by using a driver model of the simulation vehicle. An advantage of such switching is that the driver model of the simulation vehicle is usually an ideal driving model, so that switching between two scenarios is smooth, and a running curve of the simulation vehicle is smoother. A driving style (for example, a radical style or a conservative style) of the driver model of each simulation vehicle may be customized. Details are not described herein.

204: Generate, through the simulation software, a second simulation scenario based on the first traffic scenario file by using the first running state as a start state.

After controlling each simulation vehicle to transit from the second running state to the first running state, the simulation device continues to generate the second simulation scenario based on the first traffic scenario file by using the first running state as a start state. The first simulation scenario is a simulation scenario generated previous to the second simulation scenario.

It should be noted that in some implementations of this application, if the first traffic scenario file is the 1^{st} traffic scenario file for constructing a simulation traffic flow, no transition is required, and a current simulation scenario is directly generated through the simulation software.

205: Repeatedly perform step 202 to step 204, until a preset condition is met.

After controlling each simulation vehicle to complete running of one simulation scenario, the simulation device further switches to a next simulation scenario for running, and repeatedly performs step 202 to step 204 until the preset condition is met. In this way, a plurality of traffic scenario files are successively imported into the simulation software and run, and simulation scenarios that are successively obtained form a continuous simulation traffic flow. The simulation traffic flow covers continuous switchovers between different simulation scenarios under test.

It should be noted that if the traffic scenario library has only two traffic scenario files, or the simulation device needs to read only two traffic scenario files, step 205 may not need to be performed in some implementations of this application.

It should be further noted that, in some implementations of this application, a sequence of reading the traffic scenario files is not limited, and traffic scenario files may be successively read from the traffic scenario library at random, or may be read according to a preset rule. For example, a traffic scenario file that has not been read is preferentially read. This is not specifically limited herein.

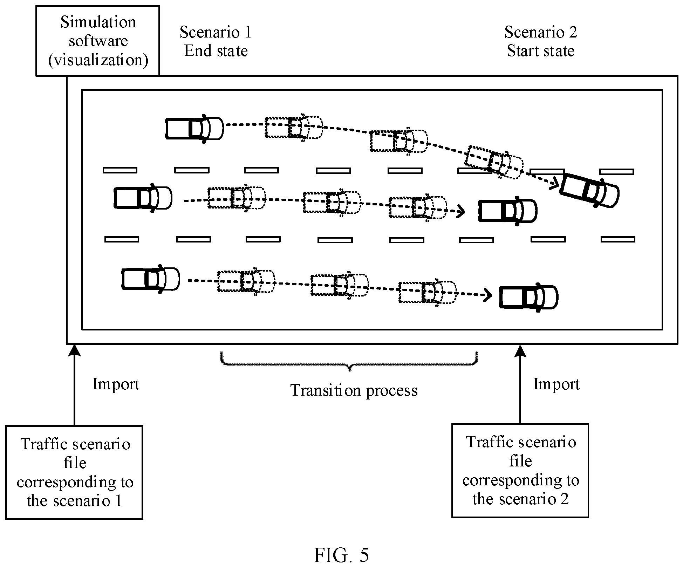

The following uses FIG. 5 as an example to describe how to switch between two scenarios. First, the simulation device reads a traffic scenario file corresponding to a scenario 1 from the traffic scenario library, and imports the traffic scenario file into simulation software. Then, the simulation software runs the scenario 1 based on the traffic scenario file. When running of the scenario 1 ends, a running state of each simulation vehicle (in FIG. 5, three simulation vehicles are used as an example) is an end state in the scenario 1, shown by simulation vehicles with solid lines on the left half part in FIG. 5. Then, the simulation device further reads a traffic scenario file corresponding to a scenario 2 from the traffic scenario library, and imports the traffic scenario file into the simulation software. In this case, the simulation device controls each simulation vehicle to transit from the end state of the scenario 1 to a start state in the scenario 2 within specified duration (for example, within 4 seconds) by using a driver model of the simulation vehicle. Simulation vehicles with dashed lines in FIG. 5 are running states of the simulation vehicles in a transition process. A dashed line with an arrow is an illustration of a running curve in the transition process. After transition ends, the simulation software runs the scenario 2 based on the traffic scenario file. When running of the scenario 2 ends, the simulation software continues to run a scenario m, transits from the scenario m to a scenario m+1, and runs the scenario m+1 according to the foregoing steps until the preset condition is met.

It should be noted that in this embodiment of this application, different simulation vehicles may be set in different scenarios. FIG. 5 shows three simulation vehicles in both the scenario 1 and the scenario 2. In this case, only the manner described in FIG. 5 needs to be used for transition. If quantities of simulation vehicles set in continuously imported traffic scenario files are different, the simulation device may control the simulation software to increase/decrease the simulation vehicles, and other simulated vehicles still perform transition in the manner described in FIG. 5.

It should be further noted that, traffic scenario types, a sequence, and proportions of different traffic scenario types of consecutive scenarios in constructed simulated traffic flows may be customized (randomness of a conventional traffic flow test may be avoided), or may be randomly read from the traffic scenario library. This is not specifically limited herein.

It should be further noted that, in some implementations of this application, in addition to a manner of using the driver model of the simulation vehicle, switching between scenarios may be controlled by inputting parameters through an external interface of the simulation device, for example, a keyboard input manner. This is not specifically limited herein.

It should be further noted that the simulation vehicle described in this embodiment of this application is presented in different forms in different simulation test modes. For example, the simulation device may flexibly adapt to different types of simulation test modes such as a software-in-the-loop (software-in-the-loop, SIL) simulation mode, a hardware-in-the-loop (hardware-in-the-loop, HIL) simulation mode, and a vehicle-in-the-loop (vehicle-in-the-loop, VIL) simulation mode. This is a common method in the industry, and details are not described herein again. In the foregoing implementation of this application, for ease of understanding, the simulation vehicle is presented in a form of a vehicle.

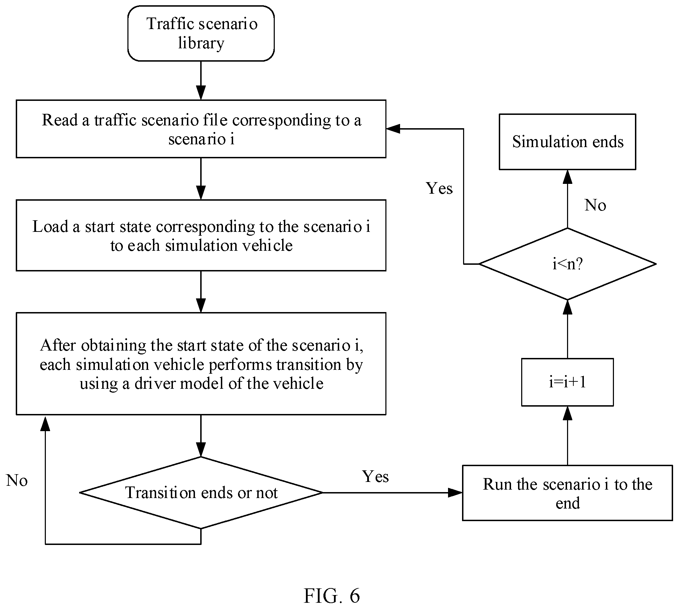

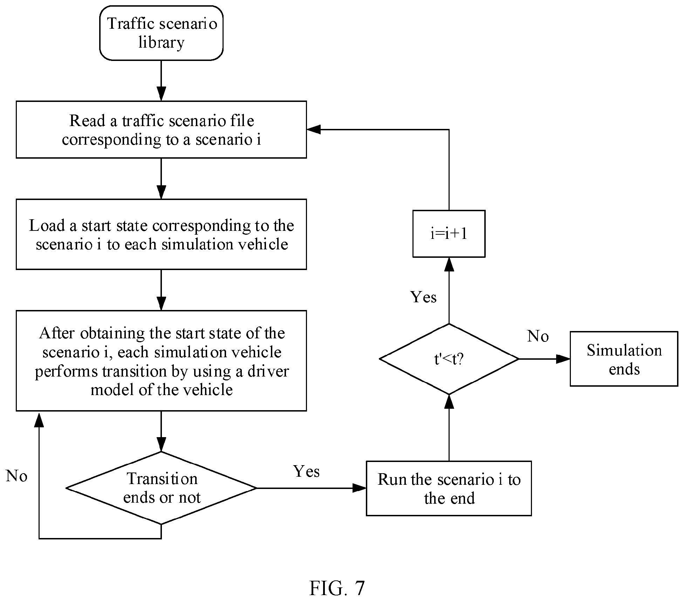

It should be further noted that in some implementations of this application, there may be a plurality of manners of determining that the preset condition is met, including but not limited to the following manners:
(1) When a quantity of simulation scenarios generated through the simulation software reaches a preset value, it indicates that the preset condition is met.
   Specifically, FIG. 6 is a schematic diagram of continuously reading a traffic scenario file from the traffic scenario library until the preset condition is met. The simulation device reads a traffic scenario file corresponding to a scenario i from the traffic scenario library, and loads a start state corresponding to the scenario i to each simulation vehicle. After obtaining the start state in the scenario i, each simulation vehicle performs transition by using a driver model (a style of the driver model may be customized), that is, transits from an end state in a previous scenario i-1 to the start state in the current scenario i. Then, it is determined whether the transition is completed within specified duration. If no, the transition process is repeatedly performed. If yes, the start state in the scenario i is entered, and the current scenario i is run to the end (that is, each simulation vehicle moves at locations and speeds at different unit moments in a corresponding traffic scenario file). It is further determined whether i=i+1 reaches a preset value n. If i=i+1 does not reach the preset value n, the foregoing process is repeated, and a traffic scenario file continues to be read from the traffic scenario library. If i=i+1 reaches the preset value n, a traffic scenario file is no longer read from the traffic scenario library, and the simulation ends. For example, it is assumed that the preset value n is set to 300. When i=i+ 1 <300, it indicates that the preset condition is not met, and a traffic scenario file continues to be read from the traffic scenario library. In this case, the simulation traffic flow is being continuously constructed. When i=i+1=300, it indicates that the preset condition is met, and in this case, 300 simulation scenarios that are continuously read and run constitute the simulation traffic flow in this application.
(2) When running duration of the simulation software reaches preset duration, it indicates that the preset condition is met.
   Specifically, FIG. 7 is another schematic diagram of continuously reading a traffic scenario file from the traffic scenario library until the preset condition is met according to an embodiment of this application. This is similar to the implementation corresponding to FIG. 6. A difference lies in that in FIG. 7, it is determined whether running duration of the simulation software reaches preset duration t. If the running duration does not reach the preset duration t, the foregoing process is repeated, and a traffic scenario file continues to be read from the traffic scenario library. If the running duration reaches the preset duration t, a traffic scenario file is no longer read from the traffic scenario library, and the simulation ends. For example, it is assumed that the preset duration t is set to 20 hours (h). Each time running of a scenario i ends, the simulation device determines whether current running duration t' of the simulation software reaches 20 hours. When the running of the scenario i ends and t' < t = 20h, it indicates that the preset condition is not met, and a traffic scenario file continues to be read from the traffic scenario library. In this case, the simulation traffic flow is being continuously constructed. When running of the scenario i ends and t' > t = 20h, it indicates that the preset condition is met. In this case, simulation scenarios that are continuously read and run constitute the simulation traffic flow in this application.
(3) When each traffic scenario file in the traffic scenario library is read at least once, it indicates that the preset condition is met.

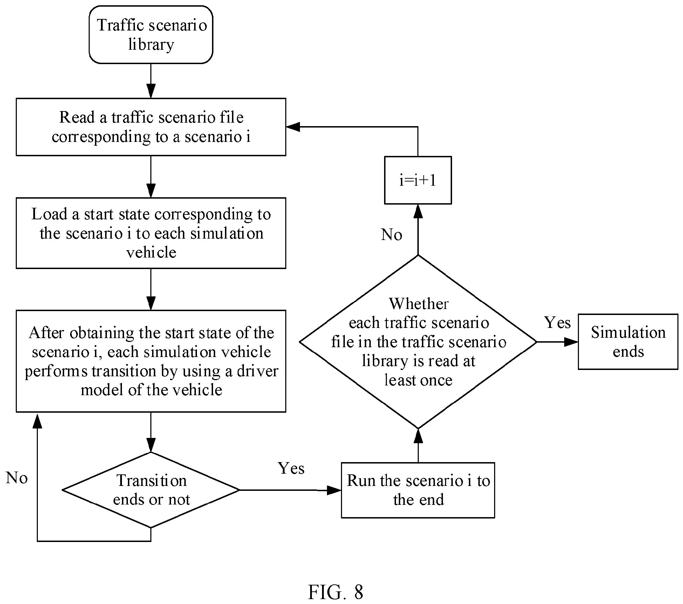

Specifically, FIG. 8 is another schematic diagram of continuously reading a traffic scenario file from the traffic scenario library until the preset condition is met according to an embodiment of this application. This is similar to the implementation corresponding to FIG. 6. A difference lies in that in FIG. 8, it is determined whether each traffic scenario file in the traffic scenario library is read at least once. If a traffic scenario file in the traffic scenario library is not read once, it indicates that the preset condition is not met. In this case, the foregoing process is repeated, and a traffic scenario file continues to be read from the traffic scenario library. If each traffic scenario file is read at least once, it indicates that the preset condition is met. In this case, after running of a current scenario i ends, a traffic scenario file is no longer read from the traffic scenario library, and the simulation ends.

It should be noted that, in some implementations of this application, the simulation device labels a read traffic scenario file, and then when reading the traffic scenario file again, may successively read traffic scenario files from remaining unread traffic scenario files, or may directly randomly read a traffic scenario file in the entire traffic scenario library (that is, a read traffic scenario file and an unread traffic scenario file are not distinguished) provided that all traffic scenario files in the entire traffic scenario library have been read at least once. Specifically, a manner of reading a traffic scenario file is not limited herein.

The simulation traffic flow may be constructed to achieve a plurality of objectives. For example, the simulation traffic flow may be constructed to reproduce or predict a traffic running state of an existing system or a future system, to explain and analyze a complex traffic phenomenon; or may be constructed to optimize a researched traffic system. A specific objective of constructing the simulation traffic flow is not limited herein.

Preferably, in this embodiment of this application, the constructed simulation traffic flow may be specifically used to test related functions and performance of an intelligent driving vehicle. Therefore, in some implementations of this application, a to-be-tested autonomous driving algorithm may be further imported into the simulation software, to test related performance of the autonomous driving algorithm in each scenario in which the constructed simulation traffic flow runs. A target simulation vehicle on which the autonomous driving algorithm is carried may be tested based on different detection types, to obtain a test result in each simulation scenario. Specifically, in the first aspect, a real-world traffic rule may be abstracted into a result evaluation standard, and then state information such as a speed and a location of an ego vehicle (that is, a target simulation vehicle) and a surrounding vehicle (that is, each simulation vehicle in each scenario) in an entire test process is read from the "perspective of god" of the simulation test, and quantitative evaluation is performed on performance of the ego vehicle in a simulation traffic flow. Finally, a result evaluation report in each simulation scenario is highly practicable. Detection types in the result evaluation report include but are not limited to at least one of collision detection, speed limit detection, on-road detection, intersection lane change detection, destination arrival detection, lane centering detection, emergency braking detection, acceleration detection, unnecessary braking detection, or smoothness detection. Item descriptions of each detection type may be shown in Table 2:

**Table 2: Detection types in the result evaluation report**

| Test type | Descriptions of a test type |
|---|---|
| Collision detection | Determine whether the ego vehicle collides with a surrounding obstacle |
| Speed limit detection | Determine whether the ego vehicle exceeds a speed limit of an ego lane |
| On-road detection | Determine whether the ego vehicle is driving on a correct road |
| Intersection lane change detection | Determine whether the ego vehicle changes a lane before an intersection and enters a correct lane |
| Destination arrival detection | Determine whether the ego vehicle reaches a range around the destination |
| Lane centering detection | Determine whether the ego vehicle is at the center of a lane |
| Emergency braking detection | Determine whether braking of the ego vehicle is too urgent, and affects driving comfort |
| Acceleration detection | Determine an acceleration/a deceleration of the ego vehicle exceeds a preset threshold and whether acceleration/deceleration frequency is too high |
| Unnecessary braking detection | Determine whether the ego vehicle has an unnecessary braking behavior |
| Smoothness detection | Determine whether a speed of the ego vehicle fluctuates greatly |

In a second aspect, when a test result does not meet a preset requirement, the simulation device may further label a traffic scenario file corresponding to the test result. An objective of labelling is to increase frequency of reading the traffic scenario file corresponding to the test result when a traffic scenario file is subsequently read from the traffic scenario library. That is, frequency of reading the labelled first traffic scenario file is higher than frequency of reading the unlabelled first traffic scenario file. For ease of understanding, the following example is used for illustration: When collision detection is performed on the ego vehicle, it is found that a test result of the ego vehicle in a simulation scenario w does not meet a preset security requirement (for example, the ego vehicle scratches a surrounding simulation vehicle). In this case, the simulation device may make a special label on a traffic scenario file w' corresponding to the simulation scenario w. Based on the label, frequency of reading the traffic scenario file w' is increased, and it is easier for the simulation software to read the traffic scenario file w' subsequently. An advantage is that a corner case library can be formed in a closed loop, and a simulation scenario with a poor test result is tested repeatedly for a plurality of times, to improve optimization efficiency of the autonomous driving algorithm.

It should be noted herein that, in this embodiment of this application, when the autonomous driving algorithm is imported into the simulation software is not limited. The autonomous driving algorithm may be imported before the simulation traffic flow is constructed, or the autonomous driving algorithm may be imported in a scenario running process. This is not specifically limited herein.

In the foregoing implementation of this application, first, the traffic scenario library that meets a test requirement is forward constructed for different simulation test objectives. A quantity of traffic scenario files of each type and proportions of traffic scenario files of different traffic scenario types in the traffic scenario library can be customized, and flexibility is high. Compared with collecting real traffic flow data, the traffic scenario library does not need to be labelled, has low costs, and is easy to obtain. In addition, the traffic scenario library is comprehensive and is not limited by collected data, so that test completeness can be ensured. Second, the simulation device reads the traffic scenario files from the forward constructed traffic scenario library, to implement continuous allocation of different simulation scenarios. Therefore, the generated simulation traffic flow can cover continuous switchovers between different simulation scenarios under test.

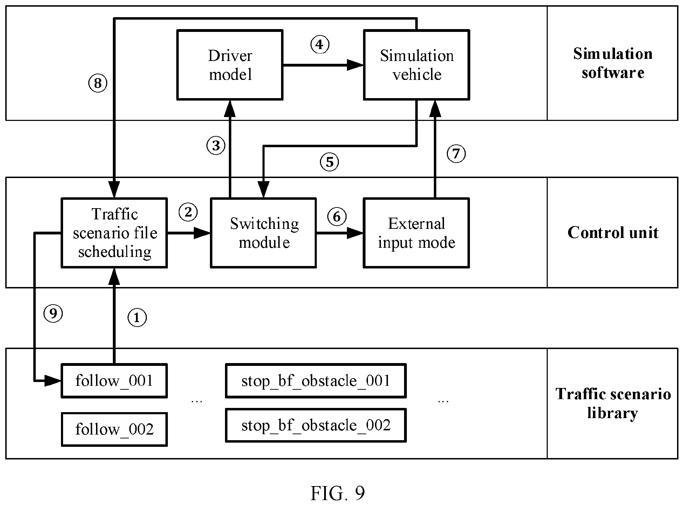

For ease of understanding, the following describes a test process of an autonomous driving algorithm by using a real test instance. FIG. 9 is a schematic diagram of internal logic of continuous scenarios allocation. A follow-to-stop and starting function of adaptive cruise control (adaptive cruise control, ACC) is used as an example for illustration. Assuming that performance of a follow-to-stop and starting function of an autonomous driving algorithm in the ACC needs to be tested, a traffic scenario library that meets a requirement needs to be constructed in advance. The follow-to-stop and starting function of the ACC is essentially a combination of vehicle following and stopping before an obstacle on an ego lane. Therefore, the constructed traffic scenario library should include traffic scenario files of two traffic scenario types: a traffic scenario file used to test vehicle following on an ego lane and a traffic scenario file used to test stopping before an obstacle on an ego lane. Each traffic scenario type has a plurality of corresponding traffic scenario files, and it is customized in advance that traffic scenario files of different traffic scenario types are alternatively read. That is, after reading a traffic scenario file used to test vehicle following on an ego lane, the simulation device (as shown in FIG. 9, a control unit of the simulation device) reads a traffic scenario file used to test stopping before an obstacle on an ego lane, and then reads a traffic scenario file used to test vehicle following on an ego lane. This process repeats until a quantity of generated simulation scenarios reaches a preset value (for example, 500). After the traffic scenario library is constructed, the simulation device may first import a corresponding autonomous driving algorithm into simulation software, and then read (that is, OO in FIG. 9), from the traffic scenario library, a running state in the first traffic scenario file (it is assumed that the traffic scenario file is follow_001) used to test vehicle following on an ego lane. The running state includes but is not limited to duration of a corresponding scenario and a running state of each simulation vehicle in the corresponding scenario at each unit moment in the duration. A running state of each simulation vehicle corresponding to the first unit moment in the traffic scenario file is referred to as a start state in the corresponding scenario, and a running state of each simulation vehicle corresponding to the last unit moment in the traffic scenario file is referred to as an end state in the corresponding scenario. The read traffic scenario file follow_001 may be used by a switching module in the control unit for scenario switching by an external interface of the simulation software (that is, ② in FIG. 9). First, the switching module performs switching to a control mode of a driver model of each simulation vehicle (that is, ③ in FIG. 9). The start state in the current traffic scenario file follow_001 is sent to each simulation vehicle, and the driver model of the simulation vehicle controls the simulation vehicle to transit to the start state in the traffic scenario file follow_001 within specified time (that is, 40 in FIG. 9). If each simulation vehicle completes the transition within the specified time, the simulation vehicle feeds back to the module (that is, ⑤ in FIG. 9). Then, the module switches the control mode of the simulation vehicle to an external input control mode (that is, ⑥ in FIG. 9), so that the simulation vehicle performs an action based on a preset scenario of the traffic scenario file follow_001 to the end (that is, ⑥ in FIG. 9). Then, the end information feedback is fed back to the control unit (that is, ⑧ in FIG. 9). The control unit correspondingly labels the traffic scenario file follow_001 in the traffic scenario library (that is, ⑨ in FIG. 9), for example, labels that the traffic scenario file is read, or labels that the traffic scenario file is tested according to the algorithm. Then the control unit continues to read a running state in the first traffic scenario file (it is assumed that the traffic scenario file is stop_bf_obstacle_001) used to test stopping before an obstacle, that is, OO in FIG. 9. The read traffic scenario file stop_bf_obstacle_001 continues to be used by a switching module in the control unit to switch an external interface of the simulation software (that is, ② in FIG. 9). First, the switching module performs switching to a control mode of a driver model of each simulation vehicle (that is, ③ in FIG. 9). The start state in the current traffic scenario file stop _bf_ obstacle_001 is sent to each simulation vehicle, and the driver model of the simulation vehicle controls the simulation vehicle to transit to the start state in the traffic scenario file stop _bf_ obstacle_001 within specified time (that is, 40 in FIG. 9). If each simulation vehicle completes the transition within the specified time, the simulation vehicle feeds back to the module (that is, ⑤ in FIG. 9). Then, the module switches the control mode of the simulation vehicle to an external input control mode (that is, ⑥ in FIG. 9), so that the simulation vehicle performs an action based on a preset scenario of the traffic scenario file stop _bf_ obstacle_001 to the end (that is, ⑦ in FIG. 9). Similarly, the end information feedback is fed back to the control unit (that is, ⑧ in FIG. 9). The control unit correspondingly labels the traffic scenario file stop _bf_ obstacle_001 in the traffic scenario library (that is, ⑨ in FIG. 9), for example, labels that the traffic scenario file is read, or labels that the traffic scenario file is tested according to the algorithm, .... This process is repeated, to invoke the traffic scenario files to test vehicle following and stopping before an obstacle from the traffic scenario library. Each scenario is run through the simulation software, to form a forward constructed simulation traffic flow that is used to test the autonomous driving algorithm related to the follow-to-stop and starting function of the ACC.

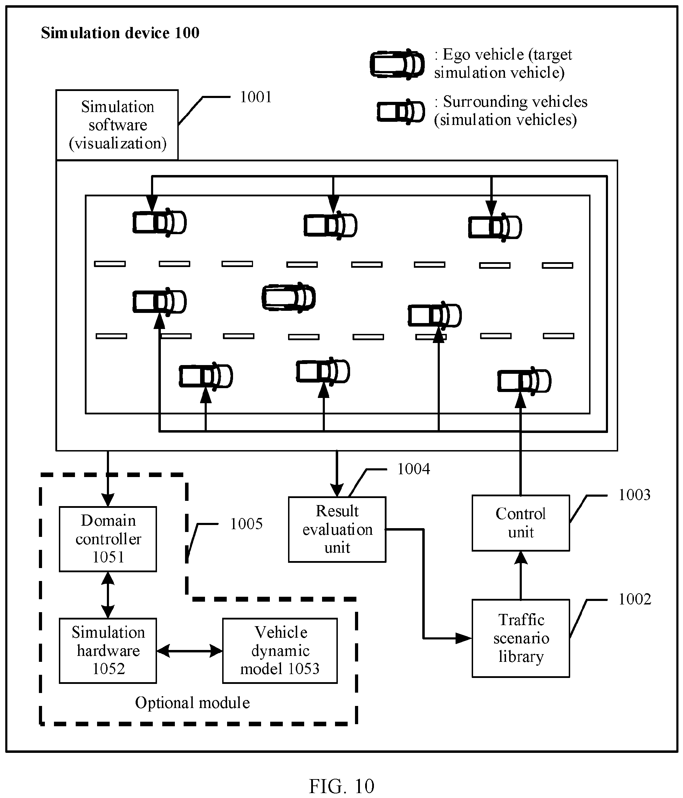

Based on the embodiments corresponding to FIG. 2 to FIG. 9, to better implement the foregoing solutions in embodiments of this application, the following further provides related devices configured to implement the foregoing solutions. Specifically, FIG. 10 is a schematic diagram of a structure of a simulation device according to an embodiment of this application. Simulation software 1001 runs on the simulation device 100. The simulation device 100 further includes a traffic scenario library 1002 and a control unit 1003. The traffic scenario library 1002 is forward constructed in advance based on a test objective. The traffic scenario library 1002 includes a plurality of traffic scenario files, and each traffic scenario file includes duration of a corresponding scenario and a running state of each simulation vehicle in the corresponding scenario at each unit moment in the duration. The control unit 1003 is configured to successively read traffic scenario files from the traffic scenario library 1002, and import the traffic scenario files into the simulation software 1001, to implement continuous transition between a plurality of scenarios, to form a simulation traffic flow. The simulation software 1001 is configured to run the imported traffic scenario files to generate corresponding simulation scenarios.

In a possible design, the simulation device 100 may further include a result evaluation unit 1004. The result evaluation unit 1004 reads state information such as a speed, an acceleration, and a location of an ego vehicle (that is, a target simulation vehicle) and each simulation vehicle in a scenario in an entire test process, performs quantitative evaluation including but not limited to collision detection, speed detection, and emergency braking detection on performance of the ego vehicle in a traffic flow, and outputs a detection result in real time. In addition, the detection result may also be used as an input of traffic scenario library classification. Corresponding traffic scenario files are recorded to form a corner case library (for example, a scenario that fails to pass the test). This facilitates continuous optimization of algorithm design.

In a possible design, the simulation device 100 may further include an optional module 1005. The optional unit may specifically include one or more modules such as a domain controller 1051, simulation hardware 1052, and a vehicle dynamic model 1053. The optional module 1005 is configured to flexibly adapt to different types of simulation tests such as SiL/HiL/ViL. Details are not described herein.

It should be noted that in some implementations of this application, both the control unit 1003 and the result evaluation unit 1004 may be used as plug-ins of the simulation software 1001, or may be independent modules. This is not specifically limited herein.

It should be further noted that content such as information exchange and an execution process between the modules/units in the simulation device 100 is based on a same concept as the embodiments corresponding to FIG. 2 to FIG. 9 in this application. For specific content, refer to the descriptions in the foregoing method embodiments of this application. Details are not described herein again.

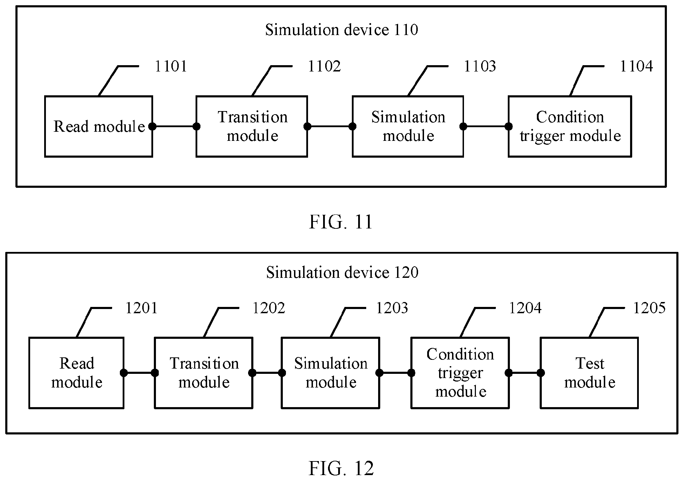

In addition, an embodiment of this application further provides a simulation device 110. Specifically, FIG. 11 is another schematic diagram of a structure of the simulation device according to an embodiment of this application. The simulation device 110 includes a read module 1101, a transition module 1102, and a simulation module 1103. The read module 1101 is configured to read a first traffic scenario file from a traffic scenario library. The traffic scenario library is forward constructed, and includes a plurality of traffic scenario files. The plurality of forward constructed traffic scenario files are a plurality of scenario files constructed based on subject knowledge. Different from traditionally collected raw traffic flow data (that is, extracting a valuable scenario through analysis from the collected raw data of real traffic flows is a data-based analysis method), specific types of traffic scenarios and a quantity of traffic scenarios of each type are clear in the forward constructed traffic scenario library. Each of the plurality of traffic scenario files includes duration of a traffic scenario and a running state of each simulation vehicle in the traffic scenario at each unit moment in the duration. Each traffic scenario file corresponds to a traffic scenario type. The traffic scenario types are classified according to a preset principle. Single-function scenarios in autonomous driving may be classified by testing and analyzing autonomous driving scenarios, for example, vehicle following, stopping before an obstacle, and lane changing. Alternatively, road scenarios actually in autonomous driving may be classified, for example, a rural road scenario, a scenario without a lane line, an intersection scenario, an expressway scenario, and a mountain road scenario. A specific principle for classifying traffic scenario types is not limited. The transition module 1102 is configured to control each simulation vehicle to transit from a second running state to a first running state. The second running state is a running state of each simulation vehicle at the last unit moment in a second traffic scenario file, that is, an end state in a previously read traffic scenario file. The first running state is a running state of each simulation vehicle at the first unit moment in the first traffic scenario file, that is, a start state in a currently read traffic scenario file. The second traffic scenario file is a traffic scenario file of a first simulation scenario generated through simulation software. The simulation module 1103 is configured to generate, through the simulation software, a second simulation scenario based on the first traffic scenario file by using the first running state as a new start state, and generate a simulation traffic flow based on the first simulation scenario and the second simulation scenario. The first simulation scenario is a simulation scenario generated previous to the second simulation scenario.

In the foregoing implementation of this application, first, the traffic scenario library that meets a test requirement may be forward constructed for different simulation test objectives. A quantity of traffic scenario files of each type and traffic scenario types in the traffic scenario library can be customized, and flexibility is high. Compared with collecting real traffic flow data, the traffic scenario library does not need to be labelled, has low costs, and is easy to obtain. In addition, the traffic scenario library is comprehensive and is not limited by collected data, so that test completeness can be ensured. Second, the simulation device successively reads the traffic scenario files (that is, successively reads the second traffic scenario file and the first traffic scenario file) from the forward constructed traffic scenario library, and controls the simulation vehicle to transit from a start state of a previous simulation scenario to an end state of a current simulation scenario, to implement continuous allocation of the two simulation scenarios. Therefore, the generated simulation traffic flow can cover continuous switchovers between the two scenarios under test, so that the test is more comprehensive.

In a possible design, the transition module 1102 is specifically configured to control each simulation vehicle to transit from the second running state to the first running state within specified duration (for example, within 3 seconds) by using a driver model of the simulation vehicle. A driving style (for example, a radical style or a conservative style) of the driver model of each simulation vehicle may be customized. Details are not described herein.

In the foregoing implementation of this application, because the driver model of the simulation vehicle is generally an ideal driving model, switching between two scenarios can be smooth, and a running curve of the simulation vehicle is smoother and is closer to that in a real driving scenario.

In a possible design, the simulation device 110 may further include a condition trigger module 1104. The condition trigger module 1104 is configured to trigger the read module 1101, the transition module 1102, and the simulation module 1103 to repeatedly perform the step of generating the second simulation scenario until a preset condition is met.

In the foregoing implementation of this application, the condition trigger module 1104 is configured to trigger the read module 1101, the transition module 1102, and the simulation module 1103 to repeatedly perform the step of generating the second simulation scenario, so that the simulation device can successively reads a plurality of traffic scenario files from the forward constructed traffic scenario library to perform simulation until the preset condition is met, and controls the simulation vehicle to transit from the start state of the previous scenario to the end state of the current scenario, to implement continuous allocation of a plurality of different simulation scenarios. Therefore, the generated simulation traffic flow can cover continuous switchovers between different scenarios under test. The simulation traffic flow obtained in this embodiment of this application includes more simulation scenarios, and is comprehensive.

In a possible design, there may be a plurality of manners of determining that the preset condition is met, and one of the manners of determining that the preset condition is met may be as follows: When a quantity of simulation scenarios generated through the simulation software reaches a preset value, it indicates that the preset condition is met. For example, it is assumed that the preset value n is set to 300, and a currently running scenario is a scenario i. When running of the scenario i ends, if i=i+1<300, it indicates that the preset condition is not met, and a traffic scenario file continues to be read from the traffic scenario library. In this case, the simulation traffic flow is being continuously constructed. When i=i+1=300, it indicates that the preset condition is met, and in this case, 300 simulation scenarios that are continuously read and run constitute the simulation traffic flow in this application.

In the foregoing implementation of this application, a condition for terminating construction of the simulation traffic flow is specifically described. In this termination manner, it is not limited that each traffic scenario file in the traffic scenario library needs to be read provided that a quantity of read traffic scenario files reaches the preset value, and randomness of construction of the simulation traffic flow is emphasized.

In a possible design, another manner of determining that the preset condition is met may be as follows: When running duration of the simulation software reaches preset duration, it indicates that the preset condition is met. For example, it is assumed that the preset duration t is set to 20 hours (h). Each time running of a scenario i ends, the simulation device determines whether current running duration t' of the simulation software reaches 20 h. When the running of the scenario i ends and t' < t = 20h, it indicates that the preset condition is not met, and a traffic scenario file continues to be read from the traffic scenario library. In this case, the simulation traffic flow is being continuously constructed. When running of the scenario i ends and t' > t = 20h, it indicates that the preset condition is met. In this case, simulation scenarios that are continuously read and run constitute the simulation traffic flow in this application.

In the foregoing implementation of this application, another condition for terminating construction of the simulation traffic flow is specifically described. In this termination manner, overall running duration of the simulation software is limited, because a running time period can be customized, a probability that the simulation software is unexpectedly interrupted in a running process is reduced.

In a possible design, another manner of determining that the preset condition is met may be as follows: When each traffic scenario file in the traffic scenario library is read at least once, it indicates that the preset condition is met. Specifically, if a traffic scenario file in the traffic scenario library has not been read once, it indicates that the preset condition is not met, and the foregoing process is repeated to continue to read a traffic scenario file from the traffic scenario library. If each traffic scenario file is read at least once, it indicates that the preset condition is met. In this case, after running of a current scenario i ends, a traffic scenario file is no longer read from the traffic scenario library, and the simulation ends. It should be noted that, in some implementations of this application, the simulation device labels a read traffic scenario file, and then when reading the traffic scenario file again, may successively read traffic scenario files from remaining unread traffic scenario files, or may directly randomly read a traffic scenario file in the entire traffic scenario library (that is, a read traffic scenario file and an unread traffic scenario file are not distinguished) provided that all traffic scenario files in the entire traffic scenario library have been read at least once. Specifically, a manner of reading a traffic scenario file is not limited herein.

In the foregoing implementation of this application, another condition for terminating construction of the simulation traffic flow is specifically described. In this termination manner, each traffic scenario file in the traffic scenario library needs to be read at least once, that is, various simulation scenarios appear at least once in the constructed simulation traffic flow, to improve test completeness.

In a possible design, to ensure completeness of classification in the traffic scenario library, in this embodiment of this application, traffic scenario files in the traffic scenario library are orthogonally classified into nine traffic scenario types: a traffic scenario file used to test free driving on an ego lane, a traffic scenario file used to test obstacle avoidance and bypassing on an ego lane, a traffic scenario file used to test a lane change to the left, a traffic scenario file used to test a lane change to the right, a traffic scenario file used to test cancellation of a lane change to the left, a traffic scenario file used to test cancellation of a lane change to the right, a traffic scenario file used to test vehicle following on an ego lane, a traffic scenario file used to test stopping before an obstacle on an ego lane, and a traffic scenario file used to test pulling over. Therefore, in this embodiment of this application, for different test objectives, the plurality of traffic scenario files in the constructed traffic scenario library include at least one of the foregoing nine traffic scenario types.

In the foregoing implementation of this application, traffic scenario types, a quantity of traffic scenario files of each type, and proportions of traffic scenario files of different traffic scenario types included in the forward constructed traffic scenario library may all be customized, and flexibility is high.

The simulation traffic flow may be constructed to achieve a plurality of objectives. For example, the simulation traffic flow may be constructed to reproduce or predict a traffic running state of an existing system or a future system, to explain and analyze a complex traffic phenomenon; or may be constructed to optimize a researched traffic system. A specific objective of constructing the simulation traffic flow is not limited herein. In some implementations of this application, the constructed simulation traffic flow may be specifically used to test related functions and performance of an intelligent driving vehicle.

Therefore, an embodiment of this application further provides a simulation device 120. The simulation device 120 includes a read module 1201, a transition module 1202, a simulation module 1203, a condition trigger module 1204, and a test module 1205. Functions of the read module 1201, the transition module 1202, the simulation module 1203, and the condition trigger module 1204 are similar to those of the read module 1101, the transition module 1102, the simulation module 1103, and the condition trigger module 1104. Details are not described herein. Specifically, the test module 1205 is configured to import an autonomous driving algorithm into the simulation software, and tests the autonomous driving algorithm based on different detection types, to obtain a test result of the autonomous driving algorithm in each simulation scenario.

In the foregoing implementation of this application, the to-be-tested autonomous driving algorithm is imported into the simulation software, to test related performance of the autonomous driving algorithm in each scenario in which the constructed simulation traffic flow runs, which is highly practicable.

In a possible design, the test module 1205 is further configured to: when a test result does not meet a preset requirement, label a traffic scenario file corresponding to the test result. When subsequently reading the traffic scenario file corresponding to the test result from the traffic scenario library, frequency of reading the traffic scenario file corresponding to the test result is increased. That is, frequency of reading the labelled first traffic scenario file is higher than frequency of reading the unlabelled first traffic scenario file.

In the foregoing implementation of this application, a corner case library may be formed in a closed loop, and a scenario with a poor test result can be subsequently read more frequently, to improve optimization efficiency of the autonomous driving algorithm.

In a possible design, the detection type includes but is not limited to at least one of collision detection, speed limit detection, on-road detection, intersection lane change detection, destination arrival detection, lane centering detection, emergency braking detection, acceleration detection, unnecessary braking detection, or smoothness detection. The collision detection is used to determine whether an ego vehicle collides with a surrounding obstacle. The speed limit detection is used to determine whether the ego vehicle exceeds a speed limit of an ego lane. The on-road detection is used to determine whether the ego vehicle travels on a correct road. The intersection lane change detection is used to determine whether the ego vehicle changes a lane before an intersection to enter a correct lane. The destination arrival detection is used to determine whether the ego vehicle reaches a range around a destination. The lane centering detection is used to determine whether the ego vehicle is at the center of a lane. The emergency braking detection is used to determine whether braking of the ego vehicle is too urgent, and affects driving comfort. The acceleration detection is used to determine whether an acceleration/a deceleration of the ego vehicle exceeds a preset threshold and whether acceleration/deceleration frequency is too high. The unnecessary braking detection is used to determine whether the ego vehicle has an unnecessary braking behavior. The smoothness detection is used to determine whether a speed of the ego vehicle greatly fluctuates.

In the foregoing implementation of this application, test content of each detection type is specifically described, and the test is highly practicable.

It should be noted that, in this embodiment of this application, when the autonomous driving algorithm is imported into the simulation software is not limited. The autonomous driving algorithm may be imported before the simulation traffic flow is constructed, or the autonomous driving algorithm may be imported in a scenario running process. This is not specifically limited herein. Therefore, the test module 1205 may be located at any location among the read module 1201, the transition module 1202, the simulation module 1203, and the condition trigger module 1204. This is not specifically limited herein. FIG. 12 shows that the test module 1205 is located after the condition trigger module 1204.

It should be further noted that content such as information exchange and an execution process between the modules/units in the simulation device 110 and the simulation device 120 is based on a same concept as the embodiments corresponding to FIG. 2 to FIG. 9 in this application. For specific content, refer to the descriptions in the foregoing method embodiments of this application. Details are not described herein again.

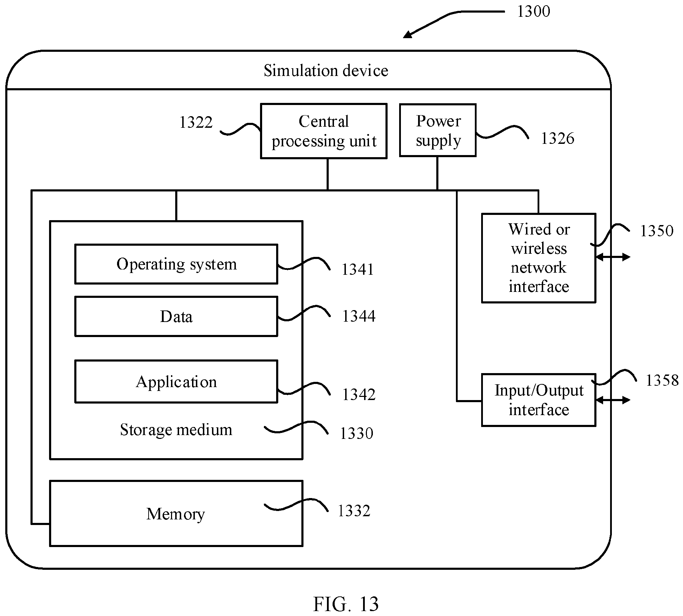

The following describes another simulation device according to an embodiment of this application. FIG. 13 is a schematic diagram of a structure of the simulation device according to an embodiment of this application. A module described in any one of the embodiments corresponding to FIG. 10 to FIG. 13 may be deployed on the simulation device 1300, to implement a function of the simulation device in any one of the embodiments corresponding to FIG. 10 to FIG. 13. Specifically, the simulation device 1300 is implemented by one or more servers. The simulation device 1300 may vary significantly due to different configurations or performance, and may include one or more central processing units (central processing units, CPU) 1322 (for example, one or more central processing units), a memory 1332, and one or more storage media 1330 (for example, one or more mass storage devices) storing an application 1342 or data 1344. The memory 1332 and the storage medium 1330 may be transient storage or persistent storage. A program stored in the storage medium 1330 may include one or more modules (not shown in the figure), and each module may include a series of instruction operations for the simulation device 1300. Further, the central processing unit 1322 may be configured to communicate with the storage medium 1330, and perform, on the simulation device 1300, the series of instruction operations in the storage medium 1330.

The simulation device 1300 may further include one or more power supplies 1326, one or more wired or wireless network interfaces 1350, one or more input/output interfaces 1358, and/or one or more operating systems 1341, such as Windows ServerTM, Mac OS XTM, UnixTM, LinuxTM, and FreeBSDTM.

In this embodiment of this application, the central processing unit 1322 is configured to perform the method in any one of the corresponding embodiments in FIG. 2 to FIG. 9. For example, the central processing unit 1322 may be configured to first read a first traffic scenario file from a traffic scenario library. The traffic scenario library is forward constructed, and includes a plurality of traffic scenario files. The plurality of forward constructed traffic scenario files are a plurality of scenario files constructed based on subject knowledge. Each of the plurality of traffic scenario files includes duration of a traffic scenario and a running state of each simulation vehicle in the traffic scenario at each unit moment in the duration. Each traffic scenario file corresponds to a traffic scenario type. The traffic scenario types are classified according to a preset principle. Single-function scenarios in autonomous driving may be classified by testing and analyzing autonomous driving scenarios, for example, vehicle following, stopping before an obstacle, and lane changing. Alternatively, road scenarios actually in autonomous driving may be classified, for example, a rural road scenario, a scenario without a lane line, an intersection scenario, an expressway scenario, and a mountain road scenario. A specific principle for classifying traffic scenario types is not limited. The central processing unit 1322 is then configured to control each simulation vehicle to transit from a second running state to a first running state. The second running state is a running state of each simulation vehicle at the last unit moment in a second traffic scenario file, that is, an end state in a previously read traffic scenario file. The first running state is a running state of each simulation vehicle at the first unit moment in the first traffic scenario file, that is, a start state in a currently read traffic scenario file. The second traffic scenario file is a traffic scenario file of a first simulation scenario generated through simulation software. The central processing unit 1322 is then configured to generate, through the simulation software, a second simulation scenario based on the first traffic scenario file by using the first running state as a new start state. The first simulation scenario is a simulation scenario generated previous to the second simulation scenario. Finally, the generated simulation scenarios constitute the simulation traffic flow in this embodiment of this application.

It should be noted that the central processing unit 1322 may be further configured to perform any step in the method embodiment corresponding to any one of FIG. 2 to FIG. 9 in this application. For specific content, refer to the descriptions in the foregoing method embodiments of this application. Details are not described herein again.

An embodiment of this application further provides a computer-readable storage medium. The computer-readable storage medium stores a program used for signal processing. When the program is run on a computer, the computer is enabled to perform the steps performed by the simulation device in the method described in the foregoing embodiments.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a read-only memory (read only memory, ROM), a random access memory (random access memory, RAM), a magnetic disk, or an optical disc of a computer, and includes several instructions for instructing a computer device (which may be a personal computer, a network device, or the like) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a training device or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

## Claims

1. A method for constructing a simulation traffic flow, comprising:
reading a first traffic scenario file from a traffic scenario library, wherein the traffic scenario library comprises a plurality of forward constructed traffic scenario files, each of the plurality of traffic scenario files comprises duration of a traffic scenario and a running state of a simulation vehicle in the traffic scenario at each unit moment in the duration, and the plurality of forward constructed traffic scenario files are a plurality of scenario files constructed based on subject knowledge;
controlling the simulation vehicle to transit from a second running state to a first running state, wherein the second running state is a running state of the simulation vehicle at the last unit moment in a second traffic scenario file, the first running state is a running state of the simulation vehicle at the first unit moment in the first traffic scenario file, and the second traffic scenario file is a traffic scenario file based on which a first simulation scenario is generated through simulation software;
generating, through the simulation software, a second simulation scenario based on the first traffic scenario file by using the first running state as a start state, wherein the first simulation scenario is a simulation scenario generated previous to the second simulation scenario; and
generating a simulation traffic flow based on the first simulation scenario and the second simulation scenario.

2. The method according to claim 1, wherein the controlling the simulation vehicle to transit from a second running state to a first running state comprises:
controlling the simulation vehicle to transit from the second running state to the first running state within specified duration by using a driver model of the simulation vehicle.

3. The method according to claim 1 or 2, wherein before the generating a simulation traffic flow based on the first simulation scenario and the second simulation scenario, the method further comprises:
repeating the step of generating the second simulation scenario until a preset condition is met.

4. The method according to claim 3, wherein that a preset condition is met comprises:
a quantity of simulation scenarios generated through the simulation software reaches a preset value.

5. The method according to claim 3, wherein that a preset condition is met comprises:
running duration of the simulation software reaches preset duration.

6. The method according to claim 3, wherein that a preset condition is met comprises:
each traffic scenario file in the traffic scenario library is read at least once.

7. The method according to any one of claims 1 to 6, wherein the method further comprises:
importing an autonomous driving algorithm into the simulation software, and testing the autonomous driving algorithm based on a detection type, to obtain a test result of the autonomous driving algorithm in the second simulation scenario.

8. The method according to claim 7, wherein the method further comprises:
when the test result does not meet a preset requirement, labeling the first scenario file corresponding to the test result, so that frequency of reading the labelled first traffic scenario file is higher than frequency of reading the unlabelled first traffic scenario file.

9. The method according to claim 7 or 8, wherein the detection type comprises at least one of the following:
collision detection, speed limit detection, on-road detection, intersection lane change detection, destination arrival detection, lane centering detection, emergency braking detection, acceleration detection, unnecessary braking detection, and smoothness detection.

10. The method according to any one of claims 1 to 9, wherein the plurality of traffic scenario files comprise at least one of the following traffic scenario types:
a traffic scenario file used to test free driving on an ego lane, a traffic scenario file used to test obstacle avoidance and bypassing on an ego lane, a traffic scenario file used to test a lane change to the left, a traffic scenario file used to test a lane change to the right, a traffic scenario file used to test cancellation of a lane change to the left, a traffic scenario file used to test cancellation of a lane change to the right, a traffic scenario file used to test vehicle following on an ego lane, a traffic scenario file used to test stopping before an obstacle on an ego lane, and a traffic scenario file used to test pulling over.

11. A simulation device, comprising:
a read module, configured to read a first traffic scenario file from a traffic scenario library, wherein the traffic scenario library comprises a plurality of forward constructed traffic scenario files, each of the plurality of traffic scenario files comprises duration of a traffic scenario and a running state of a simulation vehicle in the traffic scenario at each unit moment in the duration, and the plurality of forward constructed traffic scenario files are a plurality of scenario files constructed based on subject knowledge;
a transition module, configured to control the simulation vehicle to transit from a second running state to a first running state, wherein the second running state is a running state of the simulation vehicle at the last unit moment in a second traffic scenario file, the first running state is a running state of the simulation vehicle at the first unit moment in the first traffic scenario file, and the second traffic scenario file is a traffic scenario file based on which a first simulation scenario is generated through simulation software; and
a simulation module, configured to generate, through the simulation software, a second simulation scenario based on the first traffic scenario file by using the first running state as a start state, and generate a simulation traffic flow based on the first simulation scenario and the second simulation scenario, wherein the first simulation scenario is a simulation scenario generated previous to the second simulation scenario.

12. The device according to claim 11, wherein the transition module is specifically configured to:
control the simulation vehicle to transit from the second running state to the first running state within specified duration by using a driver model of the simulation vehicle.

13. The device according to claim 11 or 12, wherein the device further comprises:
a condition trigger module, configured to trigger the read module, the transition module, and the simulation module to repeatedly perform the step of generating the second simulation scenario until a preset condition is met.

14. The device according to claim 13, wherein that a preset condition is met comprises:
a quantity of simulation scenarios generated through the simulation software reaches a preset value.

15. The device according to claim 13, wherein that a preset condition is met comprises:
running duration of the simulation software reaches preset duration.

16. The device according to claim 13, wherein that a preset condition is met comprises:
each traffic scenario file in the traffic scenario library is read at least once.

17. The device according to any one of claims 11 to 16, wherein the device further comprises:
a test module, configured to import an autonomous driving algorithm into the simulation software, and test the autonomous driving algorithm based on a detection type, to obtain a test result of the autonomous driving algorithm in the second simulation scenario.

18. The device according to claim 17, wherein the test module is further configured to:
when the test result does not meet a preset requirement, label the first traffic scenario file corresponding to the test result, so that frequency of reading the labelled first traffic scenario file is higher than frequency of reading the unlabelled first traffic scenario file.

19. The device according to claim 17 or 18, wherein the detection type comprises at least one of the following:
collision detection, speed limit detection, on-road detection, intersection lane change detection, destination arrival detection, lane centering detection, emergency braking detection, acceleration detection, unnecessary braking detection, and smoothness detection.

20. The device according to any one of claims 11 to 19, wherein the plurality of traffic scenario files comprise at least one of the following traffic scenario types:
a traffic scenario file used to test free driving on an ego lane, a traffic scenario file used to test obstacle avoidance and bypassing on an ego lane, a traffic scenario file used to test a lane change to the left, a traffic scenario file used to test a lane change to the right, a traffic scenario file used to test cancellation of a lane change to the left, a traffic scenario file used to test cancellation of a lane change to the right, a traffic scenario file used to test vehicle following on an ego lane, a traffic scenario file used to test stopping before an obstacle on an ego lane, and a traffic scenario file used to test pulling over.

21. A simulation device, comprising a processor and a memory, wherein the processor is coupled to the memory; the memory is configured to store a program; and
the processor is configured to execute the program in the memory, so that the simulation device performs the method according to any one of claims 1 to 10.

22. A computer-readable storage medium, comprising a program, wherein when the program is run on a computer, the computer is enabled to perform the method according to any one of claims 1 to 10.

23. A computer program product comprising instructions, wherein when the computer program product is run on a computer, the computer is enabled to perform the method according to any one of claims 1 to 10.
